# EUROPÄISCHE PATENTSCHRIFT

(11) **EP 1 414 682 B1**
(45) Veröffentlichungstag und Bekanntmachung des Hinweises auf die Patenterteilung: **27.07.2005**
(21) Anmeldenummer: 02750995.9
(22) Anmeldetag: 31.05.2002
(51) Int. Cl.: B60S 3/04, B08B 13/00, C11D 17/00, C11D 11/00

(54) **VORRICHTUNG ZUR VERSORGUNG EINER FAHRZEUGWASCHANLAGE MIT CHEMISCHEN ZUSATZSTOFFEN**
DEVICE FOR SUPPLYING A VEHICLE WASHING FACILITY WITH CHEMICAL ADDITIVES
DISPOSITIF POUR ALIMENTER UNE INSTALLATION DE LAVAGE DE VEHICULES EN ADDITIFS CHIMIQUES

(30) Priorität: 25.07.2001 DE 20112273 U
(43) Veröffentlichungstag der Anmeldung: 06.05.2004
(73) Patentinhaber: WashTec Holding GmbH, 86153 Augsburg (DE)
(72) Erfinder: AUER, Robert, 86391 Stadtbergen (DE); WIMMER, Georg, 86444 Affing (DE)
(74) Vertreter: Rapp, Bertram, Dr.
(86) Internationale Anmeldenummer: PCT/EP2002/006006
(87) Internationale Veröffentlichungsnummer: WO 2003/010037

(56) Entgegenhaltungen:
- EP-A- 0 504 568
- EP-A- 0 896 914
- WO-A-01/03859
- DE-A- 4 237 356
- GB-A- 2 106 928

## Beschreibung

Die Erfindung betrifft eine Vorrichtung zur Versorgung einer Fahrzeugwaschanlage mit chemischen Zusatzstoffen nach dem Oberbegriff des Anspruchs 1.

Aus dem Stand der Technik ist es bekannt, eine Fahrzeugwaschanlage mit verschiedensten chemischen Zusatzstoffen, beispielsweise Shampoo, Trocknungshilfsmittel, Wachs und Felgenreiniger zu versorgen, indem diese Zusatzstoffe in große Kanister eingefüllt werden, aus welchen die Waschanlage über in diese Kanister eingeführte Schläuche die Zusatzstoffe nach Bedarf absaugt. Die Handhabung dieser Kanister ist äußerst umständlich, kräftezehrend und spritzempfindlich.

Will der Betreiber einer Waschanlage das Shampoo, das Trocknungshilfsmittel, das Wachs oder den Felgenreiniger auffüllen, muß er zunächst ein Gehäuse aufschließen, in dem sich der entsprechende Kanister befindet und den oder die Kanister entnehmen, was aufgrund des Gewichts der Kanister und deren Unhandlichkeit oft schwierig ist. Anschließend muß er den Verschluß des Kanisters öffnen und den Absaugschlauch herausnehmen, was bereits zum Herumspritzen von Waschwasser und Zusatzstoff führt. Hierdurch wird das Gehäuse verschmutzt und seine Oberfläche teilweise sogar angegriffen. Sodann muß der Betreiber den neuen Zusatzstoff entweder in bereits verdünnter Form einfüllen oder in konzentrierter Form und mit Wasser auffüllen. Hierdurch entsteht insbesondere bei Shampoo unter Umständen Schaum, was den Einfüll-Vorgang erheblich verzögert. Außerdem besteht die Gefahr des Überlaufens von Zusatzstoffen aus dem Kanister wodurch wiederum das Gehäuse verschmutzt wird. Schließlich muß der Kanister wiederum in das Gehäuse eingestellt, der Absaugschlauch eingeführt und das Gehäuse verschlossen werden.

Diese bekannten Versorgungsarten von Fahrzeugwaschanlagen weisen darüber hinaus den Nachteil einer erheblichen Lagerhaltung auf, da die unverdünnten oder nur geringfügig vorverdünnten Zusatzstoffe vom Betreiber bei der Fahrzeugwaschanlage zwischengelagert werden müssen.

Dokument WO-A-01/03859 offenbart den Oberbegriff des Anspruchs 1.

Es besteht daher die Aufgabe, eine Vorrichtung zur Versorgung einer Fahrzeugwaschanlage mit chemischen Zusatzstoffen so weiter zu bilden, daß ein einfaches und kraftsparendes sowie schnelles Nachfüllen der Zusatzstoffe ermöglicht wird und geringe Lagerhaltungskosten anfallen.

Gelöst wird diese Aufgabe mit den kennzeichnenden Merkmalen des Anspruchs 1. Vorteilhafte Ausgestaltungen sind den Unteransprüchen entnehmbar.

Einige Ausführungsbeispiele der Erfindung werden im folgenden näher beschrieben.

In allen Ausführungsbeispielen ist der Zusatzstoff, bei dem es sich beispielsweise um ein Shampoo, ein Trocknungshilfsmittel, Wachs oder einen Felgenreiniger oder eine Kombination dieser Zusatzstoffe handelt in hochkonzentrierter Form in einer Kartusche abgefüllt. Diese Kartusche kann an eine Aufnahmevorrichtung der Waschanlage angesetzt werden, wobei der Zusatzstoff der Kartusche je nach Bedarf kontinuierlich entnehmbar ist.

Allen Ausführungsbeispielen der Erfindung zu Grunde liegendes Prinzip besteht somit in der Verwendung hochkonzentrierter Zusatzstoffe, die sowohl in fester, pastöser, flüssiger, pulverisierter Form vorliegen können. Insbesondere können die Zusatzstoffe auch in Tablettenform vorliegen.

Dadurch, daß die Zusatzstoffe in der Kartusche gekapselt sind und die Kartusche in einen Schnellverschluß der Fahrzeugwaschanlage einsetzbar ist, entfällt das mühsame und zeitraubende Nachfüllen. Vielmehr wird lediglich die Kartusche mit dem konzentrierten Zusatzstoff ausgetauscht.

In einer bevorzugten Ausführungsfonn ist für jeden Zusatzstoff eine eigene Kartusche vorgesehen, welche in jeweils eine eigene Aufnahmevorrichtung der Fahrzeugwaschanlage einsetzbar ist. Durch entsprechende Formgebung der jeweils eigenen Kartuschen und Aufnahmevorrichtungen der Fahrzeugwaschanlage kann eine Verwechslung der Zusatzstoffe zuverlässig ausgeschlossen werden. Darüber hinaus ist es auch möglich, daß jede Kartusche nicht nur einen Zusatzstoff enthält, sondern mehrere Zusatzstoffe in mehreren getrennten Behältnissen innerhalb der Kartusche, welche über die Aufnahmevorrichtung verschiedenen Einlässen der Fahrzeugwaschanlage zuführbar sind.

Um den Zusatzstoff bzw. die Zusatzstoffe auf Seiten der Fahrzeugwaschanlage anwendungsgemäß zu verdünnen, weist die Fahrzeugwaschanlage vorzugsweise eine Verdünnungseinrichtung für die Zusatzstoffe auf. Es kann sich hierbei beispielsweise um ein Becken mit einer Rührvorrichtung handeln, in welche der Zusatzstoff eingeführt und darin mit Wasser verdünnt wird. Die Verdünnungseinrichtung kann auch eine Misch- oder Wirbelkammer sein, in die der Zusatzstoff eingeführt und in der er mit Wasser verdünnt wird.

In einer vorteilhaften Ausfühnangsform der Erfindung liegt der Zusatzstoff als Feststoff, beispielsweise als gepreßtes Pulver, innerhalb der Kartusche vor. In diesem Fall kann die Aufnahmevorrichtung eine Reibvorrichtung zum Ausreiben des Feststoffes mit Hilfe einer Klinge oder einem Schaber aufweisen.

Sofern der Zusatzstoff in einer alternativen Ausführungsform in Pulver- oder Tablettenform vorliegt, wird er unmittelbar in die Dosiereinrichtung der Fahrzeugwaschanlage eingefüllt, um dort mit Wasser verdünnt zu werden, bis die anwendungsgemäße Konzentration erreicht.

Sollte der Zusatzstoff in hochkonzentrierter, flüssiger oder pastöser Form vorliegen, kann die Fahrzeugwaschanlage ebenfalls einen Lösebehälter zur Auflösung des flüssigen oder pastösen Zuatzstoffes zur anwendungsgemäßen Verdünnung aufweisen.

## Patentansprüche

1. Vorrichtung zur Versorgung einer Fahrzeugwaschanlage mit chemischen Zusatzstoffen, welche dem Waschwasser beigefügt werden, wobei mindestens ein Zusatzstoff in hochkonzentrierter Form in einer Kartusche abgefüllt ist, welche an einen Aufnahmevorrichtung der Fahrzeugwaschanlage ansetzbar ist, wobei der Zusatzstoff der Kartusche je nach Bedarf kontinuierlich entnehmbar ist, **dadurch gekennzeichnet, daß** mehrere Zusatzstoffe in jeweils hochkonzentrierter Form in mehreren Kartuschen abgefüllt sind und jede Kartusche sowie jede Aufnahmevorrichtung sich von den anderen Kartuschen unterscheidet, so dass ein verwechslungssicheres Anflanschen gegeben ist.

2. Vorrichtung nach Anspruch 1, **dadurch gekennzeichnet, daß** die Kartusche einen Schnellverschluß aufweist, welcher in einem korrespondierenden Schnellverschluß der Fahrzeugwaschanlage einsetzbar und mit diesem verriegelbar ist.

3. Vorrichtung nach einem der Ansprüche 1 oder 2, **dadurch gekennzeichnet, daß** jede Kartusche mehrere Behältnisse zur Aufnahme verschiedener Zusatzstoffe aufweist, die über die Aufnahmevorrichtung verschiedenen Einlässen der Fahrzeugwaschanlage zuführbar sind.

4. Vorrichtung nach einem der voranstehenden Ansprüche, **dadurch gekennzeichnet, daß** die Zusatzstoffe Shampoo, Vorwaschhilfsmittel, Trocknungshilfsmittel, Wachs und Felgenreiniger umfassen.

5. Vorrichtung nach einem der voranstehenden Ansprüche, **dadurch gekennzeichnet, daß** auf seiten der Fahrzeugwaschanlagen eine Verbindungs- bzw. Dosiervorrichtung zur anwendungsgemäßen Verdünnung des oder jeden Zusatzstoffes vorgesehen ist.

6. Vorrichtung nach einem der voranstehenden Ansprüche, **dadurch gekennzeichnet, daß** mindestens ein Zusatzstoff als Feststoff vorliegt.

7. Vorrichtung nach Anspruch 6, **dadurch gekennzeichnet, daß** die Aufnahmevorrichtung eine Reibvorrichtung zum Ausreiben des Feststoffes aufweist.

8. Vorrichtung nach einem der Ansprüche 1 bis 6, **dadurch gekennzeichnet, daß** mindestens ein Zusatzstoff in Pulver- oder Tablettenform vorliegt.

9. Vorrichtung nach Anspruch 8, **dadurch gekennzeichnet, daß** die Fahrzeugwaschanlage mindestens einen Lösebehälter zur Auflösung des pulver- oder tablettenförmigen Zusatzstoffes und gleichzeitigen oder nachfolgenden Verdünnung aufweist.

10. Vorrichtung nach einem der Ansprüche 1 bis 5, **dadurch gekennzeichnet, daß** der Zusatzstoff in hochkonzentrierter flüssiger oder pastöser Form vorliegt.

11. Vorrichtung nach Anspruch 10, **dadurch gekennzeichnet, daß** die Fahrzeugwaschanlage mindestens einen Lösebehälter zur Auflösung des flüssigen oder pastösen Zusatzstoffes und gleichzeitigen oder nachfolgenden Verdünnung aufweist.

## Claims

1. Device for supplying a vehicle washing installation with chemical additives which are added to the washing water, wherein at least one additive in highly concentrated form is poured into a cartridge which can be attached to a receiving device of the vehicle washing installation, wherein the additive can be extracted continuously from the cartridge according to need, **characterised in that** a plurality of additives each in highly concentrated form are poured into a plurality of cartridges and each cartridge and each receiving device differs from the other cartridges so that confusion-free attachment is assured.

2. Device according to claim 1, **characterised in that** the cartridge exhibits a quick-action closure which can be inserted in the corresponding quick-action closure of the vehicle washing installation and locked to it.

3. Device according to one of claims 1 or 2, **characterised in that** each cartridge exhibits a plurality of containers for receiving different additives which can be fed via the receiving device to different inlets of the vehicle washing installation.

4. Device according to one of the preceding claims, **characterised in that** the additives comprise shampoo, pre-washing aid, drying aid, wax and wheel cleaner.

5. Device according to one of the preceding claims, **characterised in that** a connecting or metering device for dilution of the additive or each additive according to the application is provided in the vehicle washing installation.

6. Device according to one of the preceding claims, **characterised in that** at least one additive is present in the form of a solid.

7. Device according to claim 6, **characterised in that** the receiving device exhibits an abrading device for abrading the solid.

8. Device according to one of claims 1 to 6, **characterised in that** at least one additive is present in powder or tablet form.

9. Device according to claim 8, **characterised in that** the vehicle washing installation exhibits at least one dissolving container for dissolving the additive in powder or tablet form and simultaneous or subsequent dilution.

10. Device according to one of claims 1 to 5, **characterised in that** the additive is present in highly concentrated liquid or pastey form.

11. Device according to claim 10, **characterised in that** the vehicle washing installation exhibits at least one dissolving container for dissolving the liquid or pastey additive and simultaneous or subsequent dilution.

## Revendications

1. Dispositif pour alimenter une installation de lavage de véhicules en additifs chimiques qui sont ajoutés à l'eau de lavage, au moins un additif étant conditionné sous forme très concentrée dans une cartouche, laquelle peut être rattachée à un dispositif de réception de l'installation de lavage de véhicules, l'additif pouvant être soutiré de la cartouche en continu selon le besoin, **caractérisé en ce que** plusieurs additifs sont conditionnés dans plusieurs cartouches sous une forme respectivement très concentrée, et **en ce que** chaque cartouche ainsi que chaque dispositif de réception se différencie des autres cartouches, de sorte qu'il ne soit pas possible de commettre d'erreur d'implantation lors du bridage.

2. Dispositif selon la revendication 1, **caractérisé en ce que** la cartouche présente une fermeture rapide, laquelle peut être utilisée dans une fermeture rapide correspondante de l'installation de lavage de véhicules et peut être verrouillée avec celle-ci.

3. Dispositif selon l'une des revendications 1 ou 2, **caractérisé en ce que** chaque cartouche présente plusieurs récipients pour recevoir différents additifs, qui peuvent être amenés à différentes admissions de l'installation de lavage de véhicules par l'intermédiaire du dispositif de réception.

4. Dispositif selon l'une des revendications précédentes, **caractérisé en ce que** les additifs regroupent du shampoing, des agents auxiliaires de prélavage, des agents auxiliaires de séchage, de la cire et des produits nettoyants pour les jantes.

5. Dispositif selon l'une des revendications précédentes, **caractérisé en ce qu'**un dispositif de liaison ou éventuellement de dosage est prévu à proximité des installations de lavage de véhicules pour une dilution conforme à l'utilisation du ou de chaque additif.

6. Dispositif selon l'une des revendications précédentes, **caractérisé en ce qu'**au moins un additif soit présent comme matière solide.

7. Dispositif selon la revendication 6, **caractérisé en ce que** le dispositif de réception présente un dispositif de friction pour enlever la matière solide en frottant.

8. Dispositif selon l'une des revendications 1 à 6, **caractérisé en ce qu'**au moins un additif se trouve sous forme de poudre ou de pastille.

9. Dispositif selon la revendication 8, **caractérisé en ce que** l'installation de lavage de véhicules présente au moins un récipient de dissolution pour dissoudre l'additif sous forme de poudre ou de pastille et le diluer simultanément ou consécutivement.

10. Dispositif selon l'une des revendications 1 à 5, **caractérisé en ce que** l'additif se trouve sous une forme liquide ou pâteuse très concentrée.

11. Dispositif selon la revendication 10, **caractérisé en ce que** l'installation de lavage de véhicules présente au moins un récipient de dissolution pour dissoudre l'additif liquide ou pâteux et le diluer simultanément ou consécutivement.
